(19) Europäisches Patentamt
European Patent Office
Office européen des brevets

(11) Veröffentlichungsnummer: **0 370 233 B1**

(12) # EUROPÄISCHE PATENTSCHRIFT

(45) Veröffentlichungstag der Patentschrift: **24.11.93**

(51) Int. Cl.$^5$: **C22B 3/00**

(21) Anmeldenummer: **89119428.4**

(22) Anmeldetag: **19.10.89**

Verbunden mit 89912423.4/0490893 (europäische Anmeldenummer/Veröffentlichungsnummer) durch Entscheidung vom 04.08.92.

(54) **Verfahren zur Abtrennung von Störelementen aus Wertmetall-Elektrolytlösungen.**

(30) Priorität: **28.10.88 DE 3836731**

(43) Veröffentlichungstag der Anmeldung:
**30.05.90 Patentblatt 90/22**

(45) Bekanntmachung des Hinweises auf die Patenterteilung:
**24.11.93 Patentblatt 93/47**

(84) Benannte Vertragsstaaten:
**BE DE ES**

(56) Entgegenhaltungen:
**EP-A- 0 014 557**
**EP-A- 0 302 345**
**DE-A- 2 210 106**
**US-A- 3 464 784**
**US-A- 3 821 351**

**CHEMICAL ABSTRACTS, Band 71, 1969, Seite 187, Zusammenfassung Nr. 41354c, Columbus, Ohio, US; A. CORNEA et al.: "Extraction of metals with carboxylic acids".**

**JOURNAL OF CHEMICAL RESEARCH, 1982, Seiten 90-91; F. VERNON et al.: "Solvent extraction of metals by versahydroxamic acid"**

**CHEMICAL ABSTRACTS, Band 83, 1975, Seite 706, Zusammenfassung Nr. 157388u, Columbus, Ohio, US; GUPTA et al.: "Hydroxamic acids. XIV. Reactions of N-arylhydroxamic acids with metal ions".**

(73) Patentinhaber: **Henkel Kommanditgesellschaft auf Aktien**

**D-40191 Düsseldorf(DE)**

(72) Erfinder: **Kehl, Ralf**
**Bockumerstrasse 192**
**D-4000 Düsseldorf 31(DE)**
Erfinder: **Schwab, Werner, Dr.**
**Bachstrasse 76**
**D-4018 Langenfeld(DE)**
Erfinder: **Sudderth, Robert Brantley**
**7164 N Lemmon Rock Place**
**Tucson Arizona 85718(US)**
Erfinder: **Kordosky, Gary Alan, Dr.**
**5345 West Camino Del Dieserto**
**Tucson Arizona 85705(US)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.6/3.3.1)

## Beschreibung

Die Erfindung betrifft ein verbessertes Verfahren zur Abtrennung von Störelementen, ausgewählt aus Arsen, Antimon, Bismut und/oder Eisen, aus Wertmetall-Elektrolytlösungen durch Extraktion aus flüssiger Phase und nachfolgende Gewinnung der Störelemente zur Wiederverwertung.

Unter "Wertmetallen" werden hier die in der nachfolgenden Beschreibung und in den Patentansprüchen diejenigen metallischnen Elemente verstanden, die aus ihren natürlichen Quellen, insbesondere aus ihren Erzen, im Wege industrieller Verfahren gewonnen werden und in metallischer Form, gegebenenfalls in Legierung mit anderen Metallen, Verwendung finden. In der Gewinnung der Wertmetalle spielen neben pyrometallurgischen auch hydrometallurgische Verfahren eine große Rolle. Häufig werden die in den Erzen enthaltenen Metalle oder Metallsalze mit wäßrigen Systemen aufgeschlossen oder ausgelaugt und aus derartigen Metallsalzlösungen das Wertmetall durch Elektrolyse gewonnen. Die Elektrolyse derartiger wäßriger Lösungen wird jedoch in ihrer Effizienz dadurch stark beeinträchtigt, daß die meisten Wertmetalle in Erzen mit anderen Metallen "vergesellschaftet" sind. Die Elektrolytlösungen zur Wertmetallgewinnung enthalten daher fast immer mehr oder weniger große Mengen an Störelementen, die die elektrolytische Gewinnung des Wertmetalls beeinträchtigen oder als störende Verunreinigungen zusammen mit dem Wertmetall abgeschieden werden. Um die Reinheit der elektrolytisch abgeschiedenen Wertmetalle zu erhöhen, ist deswegen eine Abtrennung möglichst aller Störelemente aus Wertmetall-Elektrolytlösungen erwünscht.

Beispielsweise ist die Gewinnung der Metalle Kupfer, Zink, Kobalt oder Nickel auf elektrolytischem Wege möglich. Wäßrige Lösungen aus der Laugung von Erzen, die diese Metalle enthalten, enthalten jedoch üblicherweise mehr oder weniger große Mengen an Störelementen. Befriedigende Verfahren zur Abtrennung und gegebenenfalls auch Wiedergewinnung derartiger Störelemente werden nicht nur deswegen angestrebt, weil sich damit die Qualität und Quantität der abgeschiedenen Wertmetalle verbessern läßt, sondern auch deswegen, weil die Gewinnung und das Recycling der Störelemente ökonomisch und ökologisch sinnvoll ist.

Die Gewinnung von Reinstkupfer im Wege pyrometallurgischer Raffination ist beispielsweise durch zwei getrennt voneinander ablaufende Verfahrensschritte gekennzeichnet. Im ersten Schritt, der schmelzmetallurgischen Raffination, wird aus der Verhüttung von Kupfererzen stammendes, relativ unreines Rohkupfer aus der Schmelze abgeschieden ("Anodenofen"). In der nachfolgenden Raffinationselektrolyse werden Störelemente abgetrennt und teilweise im Anodenschlamm abgeschieden, während hoch leitfähiges sogenanntes "Elektrolyt-Kupfer" (bis 99,99 % Cu) an der Kathode abgeschieden wird. Die so hergestellten Kathodenblöcke aus Reinstkupfer können anschließend im Wege einer plastischen Verformung (Walzen, Ziehen, Pressen u.a.) weiterverarbeitet werden.

Unter den zahlreichen Störfaktoren der Kupfer-Raffinationselektrolyse fallen vor allem während des Verfahrensablaufs ansteigende Mengen an Arsen, Antimon, Bismut und Eisen in den Elektrolytlösungen ins Gewicht. Die genannten Störelemente reichern sich insbesondere dann zunehmend schnell in den stark schwefelsauren Elektrolyselösungen an, wenn - wie es in steigendem Umfang geschieht - an derartigen Störelementen reichere Roherze verhüttet und in den nachfolgenden Raffinationsverfahren verarbeitet werden. In der Folge muß auch mit größeren Konzentrationen der Störelemente Arsen, Antimon, Bismut und Eisen in den Kupfer-Raffinations-Elektrolytlösungen gerechnet werden. Eine Anreicherung der Störelemente verschlechtert nicht nur die Qualität des kathodisch abgeschiedenen Kupfers, das zunehmende Mengen an Arsen-, Antimon- und Bismut-Verunreinigungen enthält, sondern vermindert auch (durch den Potentialsprung $Fe^{2+} \rightarrow Fe^{3+}$ ) die Stromausbeute und erhöht dadurch die Energiekosten des Verfahrens.

Aus dem Stand der Technik sind zahlreiche Verfahren bekannt, in denen Arsen, in wenigen Fällen auch Antimon, aus den Abscheidungslösungen beseitigt werden können. Gemeinsam ist allen diesen Verfahren, daß bei Erreichen kritischer Konzentrationen der Störelemente in den Elektrolytlösungen, insbesondere bei Erreichen eines Grenzwertes von 10 g/l Arsen, ein Teilstrom der Elektrolytlösung aus den Raffinationsbehältern abgezogen und danach einer sogenannten "Kupfer-Gewinnungs-Elektrolyse" unterzogen wird. Dabei wird nicht nur das restliche Kupfer aus den Lösungen elektrolytisch abgeschieden; sondern (in "Liberatorzellen") auch die oben genannten Störelemente entfernt. Das hierdurch erhaltene, relativ unreine Kupfer muß vor Weiterverwendung nochmals umgeschmolzen und dadurch auf die gewünschte Reinheit gebracht werden. Nach der Abscheidung der genannten Elemente verbleiben in der stark schwefelsauren Lösung nur noch relativ hohe Nickelmengen, die nach Eindampfen als Nickelrohsulfat abgeschieden und zur Entfernung von Eisen-, Arsen- und gegebenenfalls auch Antimon-Verunreinigungen einer weiteren Reinigung unterworfen werden. Die resultierende konzentrierte Abfall-Schwefelsäure wird größtenteils in das Verfahren recyclisiert.

Zur Abtrennung von Arsen aus den Kupfer-Raffinationselektrolyten wird in der DE-A-26 03 874 ein Verfahren beschrieben, in dem man die wäßrige Elektrolytlösung mit einer Tributylphosphat enthaltenden organischen Phase in Kontakt bringt und Dadurch das in der Lösung enthaltene Arsen in die organische Phase extrahiert. In einem Verfahren gemäß der US-A-4 115 512 wird ebenfalls eine organische, Tributylphosphat in Abmischung mit quartären Ammoniumverbindungen enthaltende Lösung als Extraktand verwendet. Tributylphosphat sowie organische Ester der Phosphonsäure, phosphonigen Säure, Phosphinsäure und phosphinigen Säure werden in Verfahren gemäß den DE-A-26 14 341 und 26 15 638 zusammen mit organischen Lösungsmitteln als Extraktanden eingesetzt, um Arsen oder Antimon aus Kupfer-Elektrolytlösungen abzutrennen. Ebenfalls mit phosphororganischen Verbindungen, beispielsweise mit Trioctylphosphinoxid (TOPO), in organischen Lösungsmitteln wie Kerosin, wird Arsen in einem Verfahren gemäß der EP-A-0 106 118 aus Elektrolyten der Kupferraffination abgetrennt.

In der DE-A-34 23 713 wird ein weiteres Verfahren zum Entfernen von Arsen aus schwefelsauren Kupfer-Elektrolyten offenbart, in dem als Extraktanden aliphatische Alkohole mit 6 bis 13 C-Atomen, bevorzugt 2-Ethyl-1-hexanol, in organischer Phase verwendet werden. Ein Großteil, wenn auch nicht das gesamte Arsen, läßt sich im Verlauf von sechs Extraktionszyklen aus der Elektrolytlösung entfernen.

Alle genannten Verfahren weisen jedoch folgende Nachteile auf: Um eine effiziente Extraktion der Störelemente aus den Elektrolytlösungen zu erreichen, müssen die Reagenzien in konzentrierter Form eingesetzt werden. Dies geht expressis verbis beispielsweise aus der DE-A-26 15 638 (Anspruch 4 in Verbindung mit Seite 4, vorletzter Absatz, der Beschreibung) hervor. Zudem erfordern die meisten Verfahren eine hohe Konzentration an Säure in den Extraktionslösungen, die praktisch dadurch erreicht wird, daß durch Einengen die $H_2SO_4$-Konzentration im Elektrolyten von 100 bis 250 g/l auf ca. 500 g/l erhöht wird. Bei derart hohen Schwefelsäurekonzentrationen extrahieren die phosphororganischen Verbindungen nicht nur die Störelemente aus den Lösungen, sondern es werden auch erhebliche Mengen an Schwefelsäure in die organische Phase überführt. Dies erfordert den Einbau mehrerer Waschstufen, in denen die extrahierte Schwefelsäure zurückgewonnen und in das Verfahren recyclisiert werden muß. Zudem sind die phosphororganischen Extraktanden (insbesondere TBP) bei derart hohen Säurestärken nicht hinreichend stabil und damit in ihrer Wirksamkeit beeinträchtigt. Ergänzend muß in allen genannten Verfahren zur Verbesserung der Trennung der organischen von der anorganischen Phase ein sogenannter Modifier, meist Isodecanol, zum Extraktionsmittel zugesetzt werden, der unter Umständen die Zersetzung des Extraktanden noch beschleunigen kann.

Zudem weisen alle Verfahren Nachteile bei der sich an den eigentlichen Extraktionsvorgang anschließenden Reextration der Störelemente aus der organischen Phase auf. So wird gemäß den DE-A-26 14 341 und 26 15 638 das Arsen mit wäßrigen Alkalilösungen aus der organischen Phase abgetrennt. Dabei wird Arsen jedoch in den Oxidationsstufen (III) und (V) erhalten. Um $As_2O_3$ wie gewünscht als Endprodukt gewinnen zu können, muß das fünfwertige Arsen vor oder während der Reextraktion noch zusätzlich reduziert werden, üblicherweise unter Einsatz von $SO_2$. Dies erfordert einen weiteren Verfahrensschritt mit zusätzlichen Anlagen und Chemikalien. Entsprechend der EP-A-0 106 118 werden Salzsäure und andere wäßrige Mineralsäuren zur Reextraktion des Arsens verwendet. Nur durch strenge Kontrolle des Chloridgehaltes bei der Reextraktion läßt sich verhindern, daß $Cl^-$ in den Raffinationselektrolyten gelangt und dies die Kupferraffination in unerwünschter Form beeinträchtigt. Dazu sind in der Praxis aufwendige, mehrstufige Kreislaufsysteme erforderlich.

Die am Beispiel der Abtrennung von Störelementen aus Kupfer-Elektrolytlösungen aufgezeigten Schwierigkeiten gelten entsprechend auch für Verunreinigungen durch Störelemente in wäßrigen Elektrolytlösungen anderer Wertmetalle, wie z.B. Zink oder Nickel. Im Einzelfall kann die Abtrennung eines bestimmten Störelements oder einer Gruppe derartiger Elemente im Vordergrund stehen.

Ein erster Schritt in diese Richtung ist in der deutschen Offenlegungsschrift DE-A-37 25 611 (entspr. EP-A-0 302 345) beschrieben. Diese betrifft ein Verfahren zur gemeinsamen Abtrennung von Arsen, Antimon, Bismut und Eisen nebeneinander aus Wertmetall-Elektrolytlösungen im Wege der Solvent-Extraktion und nachfolgenden Wiedergewinnung der genannten Störelemente, das dadurch gekennzeichnet ist, daß man wäßrige, mineralsaure Wertmetall-Elektrolytlösungen mit einem wenig wasserlöslichen organischen Lösungsmittel versetzt, das eine oder mehrere Hydroxamsäure(n) enthält, die beiden Phasen intensiv miteinander mischt, aus der organischen Phase durch Sulfidfällung die Störelemente Arsen, Antimon und Bismut ausfällt, die Sulfide abtrennt und das noch in der Organphase verbleibende Eisen anschließend mit einem wasserlöslichen Komplexbildner für Eisen in eine wäßrige Phase reextrahiert und zurückgewinnt.

Bei diesem Verfahren des Standes der Technik erfolgt die Reextraktion der Störelemente durch Sulfidfällung aus der beladenen Organophase, wobei die Störmetalle als Sulfidfilterkuchen anfallen. Dieser Filterkuchen besteht in der Regel aus den Bestandteilen Arsensulfid, Antimonsulfid und Bismutsulfid, die bekanntermaßen für eine wirtschaftliche Weiterverwendung erst mühsam getrennt und aufgearbeitet werden

müssen.

Aufgabe der vorliegenden Erfindung ist es nun, in Anbetracht des beschriebenen Standes der Technik, ein Verfahren zur Abtrennung von Störelementen aus Wertmetall-Elektrolytlösungen und die nachfolgende Gewinnung dieser Störelemente zur Weiterverwertung bereitzustellen, das die Abtrennung der vier Störelemente Arsen (As), Antimon (Sb), Bismut (Bi) und/oder Eisen (Fe), insbesondere aber eine Abtrennung des Hauptbestandteils Arsen ermöglicht, bei der geringere Mengen der Fällungsmittels Schwefelwasserstoff verwendet werden. Darüberhinaus kann man mittels der erfindungsgemäßen Verfahrensmaßnahmen einzelne der Störelement-Ionen selektiv abtrennen, im Falle des Arsenions sogar selektiv As(III)ionen oder As(V)-ionen erzeugen. Schließlich kann man durch diese selektive Störelement-Abtrennung die Störelement-Ionen in leicht weiterverarbeitbarer Form ausfällen.

Es wurde überraschend gefunden, daß eine selektive Reextraktion der Störelemente Arsen und/oder Antimon aus der Organophase unter Verwendung von Wasser erreicht werden kann, wenn bestimmte Verfahrensparameter, wie Temperatur, Verweilzeit, Volumenverhältnis organische/wäßrige Phase und pH-Wert genau eingehalten werden.

Verfahren zur selektiven Extraktion von Metallionen aus wäßrigen Lösungen mit Hilfe einer in einem organischen Lösungsmittel gelösten Hydroxamsäure sind aus dem Stand der Technik bekannt. In der DE-C-22 10 106 werden mit einer Hydroxamsäure der allgemeinen Formel (A)

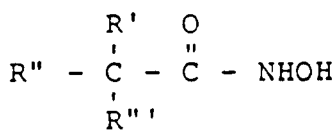

(A)

in der die Reste R für Alkylreste stehen, Übergangsmetalle aus zum Teil radioaktiven wäßrigen Lösungen von Aufarbeitungsanlagen extrahiert. Gemäß der US-A-3 464 784 wird aus wäßrigen, vierwertiges Vanadium enthaltenden Lösungen das Vanadium mit Hilfe organo-löslicher Hydroxamsäuren der allgemeinen Formel (B) extrahiert

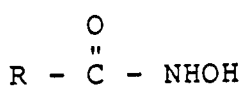

(B)

in der R für Alkyl-, Cycloalkyl- oder Arylreste mit 7 bis 44 C-Atomen, bevorzugt für sogenannte "neo-Alkylreste" stehen kann, die ein zur Carbonylgruppe benachbartes quartäres C-Atom enthalten. In "J. Chem. Research" (S) 1982, 90 ff wird außerdem die Solvent-Extraktion von Übergangsmetallen mit sogenannten Versato-Hydroxamsäuren der allgemeinen Formel (B) beschrieben, in der die Reste R verzweigte, 10 bis 15 C-Atome enthaltende Alkylreste sind. Die Solvent-Extraktion verschiedener Metall-Isotope aus wäßrigen Lösungen von Aufarbeitungsanlagen radioaktiver Rückstände mit Trialkylacethydroxamsäure wird in "Reprints of the ISEC '86, 11.-16.09.1986, Munich, S. 355-362" beschrieben.

Die Erfindung betrifft ein Verfahren zur Abtrennung von Elementen, ausgewählt aus Arsen, Antimon, Bismut und/oder Eisen, aus Wertmetall-Elektrolytlösungen im Wege der Solvent-Extraktion und nachfolgende Wiedergewinnung der genannten Störelemente, bei dem man

a) wäßrige, mineralsaure Wertmetall-Elektrolytlösungen mit einem wenig wasserlöslichen, eine oder mehrere Hydroxamsäuren der allgemeinen Formel-(I)

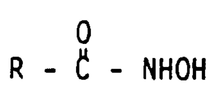

(I)

in der R für einen geradkettigen oder verzweigten, gesättigten oder ungesättigten Alkylrest mit 6 bis 22 C-Atomen, Cycloalkylrest oder Arylrest mit bis zu 19 C-Atomen steht, enthaltenden organischen Lösungsmittel versetzt,

b) die wäßrige und organische Phase über eine ausreichende Kontaktierungszeit intensiv miteinander mischt,

c) nach Phasentrennung die organische Phase abtrennt,

d) die organische Phase mit einem Sulfidierungsmittel versetzt,

e) die Sulfidfällungen des Arsens, Antimons und Wismuts auf an sich bekannte Weise von der Organo-Phase abtrennt,

f) die organische Phase gegebenenfalls mit einem wasserlöslichen Komplexbildner für Eisen oder einer wäßrigen Lösung eines solchen Komplexbildners versetzt,

g) den gebildeten Eisenkomplex mit Wasser reextrahiert

h) und die verbleibende Organophase auf an sich bekannte Weise aufarbeitet und/oder nachschärft und recyclisiert,

dadurch gekennnzeichnet, daß man nach Abtrennung der organischen Phase - Schritt c -, vor oder nach der Sulfidfällung - Schritt d -,

i) die mit Störelementen beladene organische Phase mit Wasser über eine ausreichende Kontaktierungszeit reextrahiert,

k) das in die Wasserphase reextrahierte Störmetall gegebenenfalls in an sich bekannter Weise reduktiv ausfällt und als Nebenprodukt aufarbeitet,

wobei man den Zusatz des Komplexbildners für Eisen - Schritt f - entweder im Anschluß an die Abtrennung der Sulfidfällung - Schritt e - oder zusammen mit dem Zusatz des Sulfidiermittels - Schritt d - oder vor dem Zusatz desselben vornimmt.

Das erfindungsgemäße Verfahren fällt unter den Oberbegriff der sogenannten "Solvent-Extraktionen". Darunter werden üblicherweise solche Verfahren verstanden, in denen zwei flüssige, mehr oder weniger nicht miteinander mischbare oder nicht ineinander lösliche Phasen miteinander in innigen Kontakt gebracht werden und dabei ein Übergang einer oder mehrerer Komponenten der einen in die andere Phase stattfindet. Üblicherweise stellt sich dabei ein von verschiedenen äußeren Parametern abhängiges Gleichgewicht ein. Derartige Parameter werden für die einzelnen Verfahrensschritte nachfolgend beschrieben.

Unter "Störelementen" werden nachfolgend in der Beschreibung sowie auch in den Patentansprüchen die Elemente Arsen, Antimon, Bismut und Eisen verstanden, die - in Abhängigkeit von den eingesetzten Rohstoffen und den angewendeten Verhüttungsverfahren - in mehr oder weniger großen, aber auf jeden Fall störenden Konzentrationen in den Elektrolyt-Lösungen, die erfindungsgemäß von den genannten Elementen befreit werden können, insbesondere in den Elektrolyt-Lösungen der Kupfer-Raffinationselektrolyse, gelöst sind. Dabei kann es sich um eines oder mehrere der genannten Elemente in unterschiedlichen Oxidationsstufen handeln. So kann beispielsweise das Störelement Arsen in der Oxidationsstufe (III) oder der Oxidationsstufe (V) in derartigen wäßrigen Lösungen vorliegen.

Bevorzugt werden erfindungsgemäß die oben genannten Störelemente aus wäßrigen Lösungen abgetrennt, die aus Verfahren der Kupfer-Raffinationselektrolyse stammen, bei der das Element Arsen im allgemeinen Hauptbestandteil dieser Störelementmischung ist. Das erfindungsgemäße Verfahren ist jedoch nicht auf die Abtrennung der Störelemente aus solchen Lösungen beschränkt. Es ist auch möglich, eines oder mehrere der genannten Störelemente oder alle vier aus wäßrigen, Kupfer, Zink, Nickel oder andere Wertmetalle enthaltenden Lösungen abzutrennen, die aus anderen Quellen starten bzw. in anderen Verfahren anfallen.

Der erste Schritt a) des erfindungsgemäßen Verfahrens besteht darin, wäßrige, mineralsaure Wertmetall-Elektrolytlösungen mit einem wenig wasserlöslichen organischen Lösungsmittel oder Extraktionsmittel zu versetzen, das eine oder mehrere Hydroxamsäuren der allgemeinen Formel (I) enthält,

$$R - \overset{\overset{\textstyle O}{\|}}{C} - NHOH \qquad (I)$$

in der R für einen geradkettigen oder verzweigten, gesättigten oder ungesättigten Alkylrest mit 6 bis 22 C-Atomen oder einen Cycloalkylrest oder Arylrest mit bis zu 19 C-Atomen steht. Als inerte organische Lösungsmittel, die wenig mit Wasser mischbar oder darin löslich sind, kommen z.B. folgende Verbindungen in Frage: aliphatische, cycloaliphatische oder aromatische Kohlenwasserstoffe oder deren Mischungen mit hohem Siedepunkt, chlorierte Kohlenwasserstoffe, Ketone oder Ether mit hohem Siedepunkt oder auch Mischungen derartiger Verbindungen. Bevorzugt werden, wie aus dem Stand der Technik bekannt, als wenig wasserlösliche oder wenig mit Wasser mischbare organische Lösungsmittel Kerosine oder deren

Mischungen verwendet.

Der hydrophobe Charakter der organischen Lösungsmittel bestimmt auch in weitem Umfang die Natur des in diesem Lösungsmittel bzw. Extraktionsmittel enthaltenen Extraktanden. Als solcher fungiert eine Hyroxamsäure der allgemeinen Formel (I) oder eine Mischung mehrerer derartiger Hyroxamsäuren der allgemeinen Formel (I). Der Rest R in der oben genannten allgemeinen Formel kann für geradkettige Alkylreste aus der Gruppe Hexyl, Heptyl, Octyl, Nonyl, Decyl, Undecyl, Dodecyl, Tridecyl, Tetradecyl, Pentadecyl, Hexadecyl, Heptadecyl, Octadecyl, Nonadecyl, Eicosyl, Uneicosyl oder Docosyl stehen. Es ist jedoch auch möglich, daß R in der oben genannten allgemeinen Formel (I) für die verzweigtkettigen Isomere der genannten geradkettigen Alkylreste steht. Entsprechend können anstelle der gesättigten Alkylreste auch ungesättigte Alkylreste stehen, die ebenfalls geradkettig oder verzweigt sein können.

Bevorzugt werden als Extraktanden Hydroxamsäuren der allgemeinen Formel (I) verwendet, in der R für verzweigte, gesättigte Alkylreste mit 6 bis 22 C-Atomen, bevorzugt für verzweigte, gesättigte Alkylreste mit 7 bis 19 C-Atomen steht.

Aufgrund der oben angesprochenen Forderung, daß sich der bzw. die als Extraktand(en) eingesetzte(n) Hydroxamsäure(n) möglichst gut in dem organischen Lösungsmittel lösen muß und in diesem Lösungsmittel die erforderliche Stabilität aufweist, werden mit besonderem Vorteil eine oder mehrere Hydroxamsäuren der allgemeinen Formel (I) verwendet, in der R für neo-Alkylreste der allgemeinen Formel (II) steht

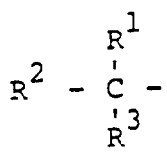 (II)

in der die Summe der C-Atome der Reste $R^1$, $R^2$ und $R^3$ im Bereich von 6 bis 18 liegt. Dies können die zahlreichen verschiedenen isomeren Reste aus der Gruppe neo-Heptyl, neo-Octyl, neo-Nonyl, neo-Decyl, neo-Undecyl, neo-Dodecyl, neo-Tridecyl, neo-Tetradecyl, neo-Pentadecyl, neo-Hexadecyl, neo-Heptadecyl, neo-Octadecyl und neo-Nonadecyl sein. Die Einzelbedeutungen der Reste $R^1$, $R^2$ und $R^3$ ist in diesem Zusammenhang von untergeordneter Bedeutung, solange jeder der genannten Reste mindestens 1 C-Atom hat. Derartige neo-Alkylreste garantieren eine optimale Löslichkeit und Stabilität der als Extraktand verwendeten Hydroxamsäuren der allgemeinen Formel (I) in dem organischen Lösungsmittel.

Die in dem erfindungsgemäßen Verfahren einsetzbaren Hydroxamsäuren der allgemeinen Formel (I) können nach allgemein aus dem Stand der Technik bekannten Verfahren hergestellt werden. So kann beispielsweise nach der DE-C-22 10 106 die entsprechende Carbonsäure durch Umsetzung mit einem Überschuß an $SOCl_2$ in das entsprechende Säurechlorid überführt und dann mit Hydroxylamin zur Hydroxamsäure der allgemeinen Formel (I) umgesetzt werden. Entsprechend ist auch (vgl. J. Chem. Research (S) 1982, 90) die Umsetzung der Carbonsäure und deren nachfolgende Umsetzung mit Hydroxylamin zur entsprechenden Hydroxamsäure der allgemeinen Formel (I) möglich. Es können jedoch auch andere, aus dem Stand der Technik bekannte Verfahren zur Herstellung derartiger Verbindungen (I) angewendet werden.

In dem erfindungsgemäßen Verfahren zur Abtrennung von Arsen, Antimon, Bismut und Eisen aus Wertmetall-Elektrolytlösungen haben sich insbesondere solche Hydroxamsäuren der allgemeinen Formel (I) bewährt, in der R für solche neo-Alkylreste der allgemeinen Formel (II) steht, deren Summen an C-Atomen der Reste $R^1$, $R^2$ und $R^3$ bei 8 bzw. im Bereich von 7 bis 17 liegen. Solche Hydroxamsäuren (I) werden nach den oben genannten Verfahren aus den unter dem Handelsnamen Versatic-Säure$^{R}$ von der Firma Shell Chemical Corporation erhältlichen Produkten hergestellt. Sie enthalten im einen Fall im Molekül der allgemeinen Formel (I) an der mit R bezeichneten Stelle einen neo-Alkylrest der allgemeinen Formel (II), in der die Summe der C-Atome der Reste $R^1$, $R^2$ und $R^3$ 8 ist, und im anderen Fall solche Verbindungen (I), in der der Rest R für neo-Alkylreste der allgemeinen Formel (II) steht, in der die Summe der C-Atome der Reste $R^1$, $R^2$ und $R^3$ im Bereich von 7 bis 17 liegt. Solche Produkte stellen ein technisches Gemisch von Hydroxamsäuren unterschiedlicher Kettenlänge dar. Sie ermöglichen den Einsatz als Extraktionsreagens, welches für die gewünschten Anwendungen optimale Eigenschaften besitzt, also nicht nur in der organischen Phase sehr gut löslich und stabil ist, sondern sich auch optimal mit den oben genannten Störelementen reversibel beladen läßt. Außerdem sind derartige Hydroxamsäuren in den in derartigen Wertmetall-Elektrolytlösungen üblichen pH-Wert-Bereichen äußerst stabil und extrahieren sowohl bei Raumtemperatur als auch im erhöhten Temperaturbereich keine freie Mineralsäure, insbesondere aus Kupfer-Elektrolytlösungen keine Schwefelsäure. Außerdem Weisen derartige Hydroxamsäuren enthaltende organische Phasen

eine Viskosität in einem solchen Bereich auf, daß nach dem nachfolgend besprochenen Durchmischungsvorgang eine optimale Phasentrennung gewährleistet ist. Probleme bei der Abtrennung der organischen von der wäßrigen Phase werden so vermieden.

Der Schritt b) des erfindungsgemäßen Verfahrens besteht darin, die wäßrige und die organische Phase über eine ausreichende Kontaktierungszeit hinweg intensiv miteinander zu vermischen. Die Kontaktierungszeit der beiden Phasen ist einer der Parameter, von dem die extrahierte Menge der Störelemente, insbesondere die extrahierte Menge an Arsen, abhängig ist. Bei festgelegter Reagenzkonzentration, die nachfolgend im Detail angegeben wird, wird nach kurzer Kontaktierungszeit (3 bis 5 min) praktisch die Hauptmenge der Störelemente Antimon, Bismut und Eisen extrahiert. Die relative Menge an in die organische Phase aufgenommenem Arsen ist jedoch deutlich geringer. Dieser Sachverhalt erklärt sich aus der Tatsache, daß in typischen Elektrolytlösungen, insbesondere solchen des Kupfer-Raffinationsganges, deren Zusammensetzung je nach Qualität und Herstellung der Kupfer-Rohanoden schwanken, nur relativ geringe Mengen an Antimon, Bismut und Eisen (ca. 0,1 bis 0,6 g/l) enthalten sind, die Arsenmengen jedoch deutlich höher liegen (ca. 8 bis oberhalb von 20 g/l). Soll möglichst viel Arsen extrahiert werden, was angestrebt ist, so muß die Kontaktierungszeit entsprechend verlängert und/oder die Konzentration an Extraktand in der organischen Phase entsprechend erhöht werden. Zur Ausnutzung der maximalen Beladbarkeit der Hydroxamsäuren der allgemeinen Formel (I) werden die wäßrige und die organische Phase bevorzugt über eine Zeit von 1 bis 60 min, besonders bevorzugt über eine Zeit von 10 bis 20 min, intensiv miteinander gemischt. In dieser Zeit ist auch ein Großteil des in den Kupfer-Elektrolytlösungen enthaltenen Arsens in die organische Phase übergegangen.

Ein weiterer wichtiger Parameter für die extrahierte Menge der Störelemente liegt in der Konzentration an Hydroxamsäuren der allgemeinen Formel (I) oder deren Gemischen. Die Menge an Extraktand in der organischen Phase wird dadurch begrenzt, daß bei hohen Konzentrationen der Hydroxamsäuren (I) in der organischen Phase die Viskosität während der Beladung mit den Störelementen so stark ansteigt, daß bei einer kontinuierlichen Verfahrensweise eine effiziente Vermischung der beiden Phasen nicht mehr gewährleistet werden kann. Außerdem wird, wie oben beschrieben, die Trennung der organischen von der wäßrigen Phase mit steigender Viskosität wesentlich erschwert. Daher ist es erfindungsgemäß bevorzugt, in dem erfindungsgemäßen Verfahren organische Lösungsmittel wie Kerosine oder deren Mischungen zu verwenden, die eine oder mehrere Hydroxamsäuren der allgemeinen Formel (I) in einer Konzentration von 0,1 bis 2,0 mol/l organische Phase, bevorzugt in einer Konzentration von 0,5 bis 1,0 mol/l organischer Phase, enthalten.

Die Temperatur, bei der die beiden Phasen miteinander in Kontakt gebracht werden, liegt üblicherweise im Bereich von 20 bis 70 °C, bevorzugt im Bereich von 30 bis 60 °C. Aus dem Verfahrensgang abgezogene Elektrolyt-Lösungen weisen verfahrensbedingt Temperaturen im Bereich von 50 bis 70 °C auf. Bei kontinuierlicher Verfahrensweise ist also ein gesondertes Erwärmen der Mischungen im Mixer nicht mehr erforderlich. Bei einer Temperatur im genannten Bereich werden beide Phasen intensiv miteinander gemischt. Dies kann beispielsweise dadurch geschehen, daß man sie in kontinuierlicher Verfahrensweise einem sogenannten "Mixer-Settler" zuführt, sie in diesem bei der angegebenen Temperatur über die angegebene Zeit miteinander vermischt und die Phasen im Settler abtrennen läßt.

Man zieht in einem nachfolgenden Verfahrensschritt c) die organische Phase, die eine oder mehrere Hydroxamsäuren der allgemeinen Formel (I) und die extrahierten Störelemente Arsen, Antimon, Bismut und Eisen enthält, von der wäßrigen Phase ab.

Im Verfahrensschritt i) wird die organische, Störelementbeladene Phase mit Wasser über eine ausreichende Kontaktierungszeit reextrahiert. Schon bei einmaliger Durchführung dieses Verfahrensschritts kommt es zu einer Reextraktion des Störelements Arsen in die Wasserphase. Hierbei hängen die Verfahrensparameter von Art (Oxidationsstufe) und Menge des in der Organophase vorhandenen Arsens ab. Beispielsweise werden As(III)ionen vergleichsweise rascher als As(V)ionen in die Wasserphase reextrahiert. Dies ist im folgenden durch Beispiele erläutert.

Die Kontaktierungszeit beeinflußt die Verteilung der Störmetalle zwischen der organischen und der wäßrigen Phase. Unter einer ausreichenden Kontaktierungszeit hat sich bei der vorliegenden Erfindung eine Zeit von 1 bis 20 min, vorzugsweise 10 bis 15 min als zweckmäßig erwiesen, während der die beiden Phasen miteinander vermischt werden. Die Temperatur, bei der die beiden Phasen miteinander in Kontakt gehalten werden sollten, liegt üblicherweise im Bereich von 20 bis 80 °C, vorzugsweise 50 bis 70 °C. Das Volumenverhältnis organische Phase zu zugefügter Wasserphase sollte möglichst so eingestellt werden, daß die organische Phase mit einer solchen Menge Wasser kontaktiert wird, daß eine Phasentrennung nach der Reextraktion grundsätzlich noch möglich ist, um so eine wäßrige Phase mit möglichst hohem Störmetallgehalt zu erhalten, die ohne Aufkonzentrieren der Wasserphase aufgearbeitet werden kann.

Vorzugsweise setzt man so zu 100 Volumen-Teilen der organischen Phase 5 bis 2 000 Volumen-Teile Wasserphase hinzu.

Durch die Einstellung des pH-Wert-Bereichs auf schwachsauer bzw. starksauer ist es schließlich möglich, einen Teil des Hauptbestandteils an Störmetall Arsen, entweder spezifisch oder einen Teil des Hauptbestandteils Arsen in Kombination mit Antimon in die Wasserphase zu überführen.

Bei einem pH-Wert von 0 bis 6, vorzugsweise 1,5 bis 4, erhält man bei der Reextraktion eine nahezu ausschließlich Arsenionen enthaltende wäßrige Lösung. Im Falle von As(III)ionen kann eine direkte Ausfällung als Arsentrioxid, gegebenenfalls nach Aufkonzentrieren, erfolgen. Wird dagegen As(V)ion in die Wasserphase reextrahiert, so ist vor der Fällung eine Reduktion notwendig.

Bei einem pH-Wert von 3 bis 6, vorzugsweise 4 bis 6, erhält man bei der Reextraktion in der wäßrigen Phase eine Metallionenmischung, die neben dem Hauptbestandteil Arsen als Nebenbestandteil Antimon enthält.

In dem Verfahrensschritt k) wird das in die Wasserphase reextrahierte Störmetall gegebenenfalls in an sich bekannter Weise reduktiv ausgefällt und als Nebenprodukt aufgearbeitet. Dies geschieht bei starksauren wäßrigen Lösungen, die wie vorstehend beschrieben Arsen(V)ionen enthalten, durch Zugabe eines Reduktionsmittels, beispielsweise Schwefeldioxid oder Schwefelwasserstoff. Das hierbei erhaltene reine Prezipitat aus Arsentrioxid oder Arsentrisulfid kann in an sich bekannter Weise weiterverarbeitet werden.

Bei den sauren wäßrigen Lösungen, die neben dem Hauptbestandteil Arsen als Nebenbestandteil Antimon enthalten, müssen die Komponenten zunächst in an sich bekannter Weise aufgetrennt und daraufhin zu Arsen bzw. Antimonverbindungen weiterverarbeitet werden. Die Elemente Arsen und Antimon sind für bestimmte technische Anwendungen, beispielsweise für die Elektronikindustrie, von besonderem Interesse.

Der Schritt d) des erfindungsgemäßen Verfahrens besteht darin, die organische Phase mit einem Sulfidierungsmittel zu versetzen. Dieser Verfahrensschritt ist in dem erfindungsgemäßen Verfahren insofern von Bedeutung, als die Extraktion der Störelemente aus Wertmetall-Elektrolytlösungen bei sehr hohen Mineralsäurekonzentrationen (z.B. 150 bis 250 g $H_2SO_4$/l) erfolgt. Eine üblicherweise für die Reextraktion von Störelementen mögliche Erhöhung der Säurekonzentration scheidet für die Abtrennung der Störelemente aus derart sauren Lösungen praktisch aus. Außerdem kann auch eine Reextraktion der Störelemente durch Behandlung der organischen Phase mit alkalischen Lösungen nicht erfolgen, da die Hydroxamsäuren der allgemeinen Formel (I), insbesondere im stärker alkalischen Bereich, nicht genügend stabil sind. Die entsprechend dem erfindungsgemäßen Verfahren direkt an der beladenen organischen Phase durchführbare Sulfidfällung der Störelemente umgeht in einfacher und überraschender Weise die Notwendigkeit einer Reextraktion der Störelemente aus der organischen Phase durch Behandlung mit stark sauren oder stark alkalischen wäßrigen Lösungen.

Als Sulfidierungsmittel eignen sich in dem erfindungsgemäßen Verfahren Schwefelwasserstoff-($H_2S$-)Gas und/oder wasserfreies Natriumsulfid oder Natriumhydrogensulfid. Vorzugsweise wird Schwefelwasserstoff verwendet. Dieser ist für den Fällungsschritt besonders gut geeignet, da er zwei Funktionen gleichzeitig ausübt: Zum einen wirkt $H_2S$ als Reagens für die Fallung von Arsen, Antimon und Bismut aus der organischen Phase, zum anderen regeneriert er (aufgrund seiner "sauren" Eigenschaften) das Extraktionsreagens (die Hydroxamsäure(n)) der allgemeinen Formel (I).

Bei der Anwendung der direkten Sulfidfällung aus der organischen Phase unter Einsatz von Schwefelwasserstoff sind als wichtige kontrollierende Verfahrensparameter der Schwefelwasserstoffdruck, die Temperatur während des Fällungsvorganges sowie die Reaktionszeit zu nennen. Die genannten Parameter können in großer Bandbreite variiert werden. Zur Fällung der Sulfide der Störelemente ist die Zugabe einer stöchiometrischen oder geringfügig überstöchiometrischen Menge gasförmigen Schwefelwasserstoffs ausreichend. Diese wird dadurch bewirkt, daß $H_2S$ in der anhand der Mengen der Störelemente im Elektrolyten vorberechneten Menge eingeleitet und das Reaktionssystem mit einem Inertgas, z.B. $N_2$, beaufschlagt wird. Es ist jedoch auch möglich, den $H_2S$-Druck im Verlaufe des Fällungsvorganges auf einen Wert von 0,1 bis 50 bar, bevorzugt auf einen Wert im Bereich von 0,5 bis 1 bar, einzustellen. Ein $H_2S$-Überdruck begünstigt insbesondere die Fallung der Arsensulfide. Bei Anwendung eines geringen Überdrucks (1 bis 3 bar) kann die Fällungsreaktion in einem geeigneten Glasgefäß durchgeführt werden; der Einsatz aufwendiger Metall-Autoklaven ist also nicht erforderlich. Möchte man dagegen höhere Drücke (4 bar und höher) anwenden, so ist im allgemeinen die Verwendung eines Autoklaven erforderlich. Vorteilhaft ist jedoch, daß der Einsatz hoch-korrosionsbeständiger und damit teurer AutoklavenMaterialien (z.B. Hasteloy-Stähle) nicht notwendig ist; es können Autoklaven aus üblichen Stählen (beipsielsweise V4A-Stählen) verwendet werden.

Die Vollständigkeit der Fällung wird auch durch einen weiteren Verfahrensparameter, nämlich die Temperatur, beeinflußt. Bei höheren Reaktionstemperaturen, die bevorzugt im Bereich zwischen 40 und 90 °C, besonders bevorzugt zwischen 60 und 80 °C, liegen, wird eine vollständige Fällung der Sulfide dar

Störelemente Arsen, Antimon und Bismut in der organischen Phase erreicht.

Der dritte Verfahrensparameter, die Reaktionszeit, ist ebenfalls von Bedeutung für die Vollständigkeit der Fällung und entspricht im wesentlichen der Verweilzeit der organischen Phase im Reaktionsgefäß während der Einleitung von $H_2S$. Die Reaktionszeit muß in Abhängigkeit von den anderen genannten Parametern eingestellt werden und liegt in bevorzugten Ausführungsformen des erfindungsgemäßen Verfahrens bei 1 bis 60 min, bevorzugt bei 5 bis 20 min.

Eine Abstimmung der sich gegenseitig beeinflussenden Parameter der Sulfidierungsreaktion kann durch wenige einfache Versuche erfolgen. Besonders haben sich bei der Durchführung des erfindungsgemäßen Verfahrens eine Reaktionsführung bei 0,5 bar $H_2S$-Druck, eine Reaktionszeit von 15 min und eine Temperatur der beladenen Organophase beim Einleiten des Schwefelwassserstoffes von 80 °C bewährt. Bei diesen Reaktionsbedingungen werden die Störelemente Antimon und Bismut zu 100 % und Arsen zu einem großen Teil (80 % und höher) gefällt. Für eine komplette Ausfällung des Arsens ist gegebenenfalls eine weitere Druckerhöhung über diesen besonders bevorzugten Bereich hinaus oder eine entsprechend längere Reaktionszeit erforderlich.

Durch Einleiten von $H_2S$ in die Organophase werden die Störelemente Arsen, Antimon und Bismut als Sulfide gefällt und können nach abgeschlossener Fällung auf an sich bekannten Wegen im Verfahrensschritt e) von der Organophase abgetrennt werden. Dies geschieht üblicherweise dadurch, daß die Organophase über ein Filter geeigneter Größe filtriert oder auch zentrifugiert wird. Es ist jedoch auch möglich, die gebildeten Sulfid-Fällungen des Arsens, Antimons und Bismuts im Reaktionsmedium sich absetzen zu lassen und die überstehende Organophase zu dekantieren. Welcher Weg der Abtrennung im einzelnen gewählt wird, hängt von der Konsistenz der gebildeten Sulfid-Fällungen und von weiteren Verfahrensparametern ab und ist ohne kritischen Einfluß auf die Vollständigkeit der Wiedergewinnung der Störelemente. Um die gefällten Sulfide von Rückständen organischer Komponenten zu befreien ist es möglich, sie mit jedem beliebigen organischen Lösungsmittel, beispielsweise mit Kohlenwasserstoffen der oben angegebenen Art oder auch mit anderen, für derartige Waschzwecke geeigneten Lösungsmitteln, wie Aceton, flüchtigen Estern o.ä., zu waschen. Dadurch läßt sich eine vollständige Abtrennung organischer Komponenten vom Filterkuchen erreichen.

In diesem Zusammenhang ist es für den Fachmann klar, daß die Verfahrensschritte Reextraktion mit Wasser (i) und Sulfidfällung (d) auch ausgetauscht werden können.

Außerdem ist es erwünscht, für die nachfolgende Abtrennung des Eisens aus der Organophase möglichst das gesamte darin gelöste $H_2S$ zu entfernen. Es wird deswegen als vorteilhaft angesehen, nach der Abfiltration der ausgefällten Sulfide und vor dem oben beschriebenen Schritt des Waschens mit einem organischen Lösungsmittel den Filterkuchen gegebenenfalls mit einer Säure, vorzugsweise einer Mineralsäure, wie Schwefelsäure, zu behandeln. Vorzugsweise wird die nach der Sulfidfällung erhaltene Organophase mit einem Inertgas erschöpfend durch Ausblasen gespült. Dadurch werden gelöste oder überschüssige Restmengen von $H_2S$ vollständig ausgetrieben. Die Behandlung kann auch durch Kontaktierung des Filterkuchens mit der Mineralsäure in einem separaten geschlossenen Gefäß unter intensiver Vermischung erfolgen. Eine kontinuierliche Ausbildung dieses Waschschrittes ist möglich, wobei die verwendete Mineralsäure dann im Kreislauf geführt und für den Reinigungsschritt nachfolgender Chargen zur Verfügung gestellt werden kann.

Wie bereits oben erwähnt, wird das durch eine oder mehrere Hydroxamsäuren (I) aus der Wertmetall-Elektrolytösung in die Organophase überführte Eisen unter den oben näher definierten Bedingungen nicht gefällt. Eine Reextraktion des Eisens durch Behandlung der Organophase mit basischen wäßrigen Lösungen ist aufgrund der geringen Stabilität der Extraktanden (Hydroxamsäuren) nicht möglich, ohne einen Großteil zu, verlieren.

Wenn eine Abtrennung des Eisens aus der Organophase erwünscht ist, wird dies erfindungsgemäß im Verfahrensschritt f) dadurch bewirkt, daß man die Organophase nach der Abtrennung der anderen Störelemente als Sulfide und einer Entfernung überschüssigen Schwefelwasserstoffs mit einem wasserlöslichen Komplexbildner für Eisen unmittelbar oder mit einer wäßrigen Lösung eines derartigen Komplexbildners versetzt. Als wasserlösliche Komplexbildner für Eisen werden Verbindungen aus der Gruppe Chlorwasserstoff, Oxalsäure oder P-organische Säuren, insbesondere Hydroxyethandiphosphonsäure (HEDP) bevorzugt, also solche Komplexbildner, von denen eine hohe Affinität zum Eisen bekannt ist. Von diesen sind Oxalsäure oder Chlorwasserstoff besonders bevorzugt.

Die Abtrennung des Eisens als anorganischer Chloro-Komplex oder Oxalat bzw. Phosphonat ist, wie auch die anderen Schritte, von der Konzentration des Komplexbildners in der Organophase oder - bei Zugabe wäßriger Lösungen des Komplexbildners - in der wäßrigen Phase, der Behandlungszeit der Organophase mit dem Komplexbildner oder seiner wäßrigen Lösung sowie der Reaktionstemperatur abhängig; wie oben schon angegeben, stehen die genannten Verfahrensparameter auch in einer wechselseitigen Abhängigkeit. Es hat sich in der Praxis gezeigt, daß die Konzentration an wasserlöslichem Komplexbildner für Eisen in der Organophase oder der wäßrigen Phase mit Vorteil bei Werten von 0,1 bis 2 mol des Komplexbildners pro Liter, bevorzugt bei einer Konzentration von 0,5 bis 1 mol des Komplexbildners pro Liter, liegen kann. Bei kontinuierlicher Betriebsweise des Eisen-Komplexierungs-Schrittes, die bevorzugt in einem Mixer-Settler durchgeführt wird, sind bei solchen Komplexbildnerkonzentrationen Kontaktierungszeiten von 1 bis 20 min, bevorzugt von über 5 bis 15 min, erforderlich. Diese Behandlungszeiten gelten für eine Durchführung des Komplexierungsschrittes bei Raumtemperatur und können entsprechend reduziert werden, wenn die Temperatur angehoben wird. Besonders bevorzugt ist es, die Organophase mit 1 mol Oxalsäure oder HEDP pro Liter Organophase oder wäßrige Phase über eine Kontaktierungszeit von 15 min in einem Mixer-Settler zu behandeln. Bei einer solchen Behandlungsweise kann aus der Organophase, die die Sulfid-Fällungsstufe durchlaufen hatte und die danach noch 0,6 g Eisen/l enthielt, der Eisengehalt bis auf 0,07 g/l, d.h. um nahezu eine Zehnerpotenz, reduziert werden.

Wenn der Komplexbildner unmittelbar der Organophase zugesetzt wird, wird der auf dem oben beschriebenen Wege gebildete Eisenkomplex auf an sich bekanntem Wege im Verfahrensschritt g) mit Wasser aus der Organophase reextrahiert. Dazu wird die Organophase mit einer ausreichenden Menge Wasser in innigen Kontakt gebracht, wobei aufgrund dor guten Wasserlöslichkeit des Eisenkomplexes ein vollständiger Übergang in die wäßrige Phase beobachtet wird. Bei Zugabe wäßriger Komplexbildner-Lösungen enthalten diese nach inniger Vermischung mit und anschließender Separierung von der Organophase nahezu das gesamte aus den Elektrolyse-Lösungen extrahierte Eisen. Aus dieser wäßrigen Phase kann nach an sich bekannten Methoden das Eisen, sofern erwünscht, wiedergewonnen weiden.

Bei der Verwendung von Chlorwasserstoff als wasserlöslichem Komplexbildner für Eisen wird das in der Organophase enthaltene Eisen vollständig in einen anorganischen Chlorokomplex überführt. Um eine Recyclisierung der organischen Phase und der darin enthaltenen Hydroxamsäuren und damit Bereitstellung für einen neuen Extraktionscyclus zu ermöglichen, muß die Organophase weitgehend, wenn nicht vollständig, von Chlorwasserstoff bzw. freien Chloridionen befreit werden. Dazu wird nach Überführung des in der Organophase gelösten Eisens in die anionische Komplexform durch Zusatz einer ausreichenden Menge Chlorwasserstoff die Organophase mit einem sekundären Amin als flüssigem Ionenaustauscher, beispielsweise mit dem unter dem Handelsnamen "Amberlite$^R$ LA2" erhältlichen Ionenaustauscher, erneut extrahiert. Das auf diese Weise extrahierte Eisen kann mit Wasser anschließend wieder reextrahiert werden. Die Organophase wird anschließend mit Wasser chloridfrei gewaschen, um sie und die darin enthaltenen Hydroxamsäuren für eine erneute Verwendung im Extraktionskreislauf brauchbar zu machen. Eine bis zwei Stufen des Waschens mit Wasser bewirken eine Absenkung des Chloridgehaltes in der Organophase unter 50 ppm, bei kontrollierter Verwendung des eingeleiteten Chlorwasserstoffes sogar unter 30 ppm. Bevorzugt wird eine Absenkung des Chloridgehalts in der Organophase auf wenige ppm. Die resultierende, die Hydroxamsäure(n) enthaltende Organophase kann anschließend unmittelbar wieder zur Extraktion der Störelemente eingesetzt werden.

Die Fällung des Eisens kann außer durch Zusatz gasförmigen Chlorwasserstoffs auch dadurch erfolgen, daß man die Organophase mit wäßriger Chlorwasserstoffsäure (Salzsäure) behandelt, wobei sich in der Praxis der Einsatz von 1 bis 12-molarer HCl, vorzugsweise von 3 bis 8-molarer HCl, bewährt hat. Insgesamt ist hinsichtlich der Konzentration an Chlorwasserstoff sicherzustellen, daß die Menge der als wasserlösliche Komplexbildner anzusehenden Chloridionen im oben angegebenen Bereich, also bei 0,1 bis 2 mol des Komplexbildners pro Liter organischer Phase, liegt. Dabei wird sichergestellt, daß das gesamte Eisen in die Form eines anorganischen Chloro-Komplexes überführt wird. Dieser wird dann nach Zusatz von Wasser mit der wäßrigen, anorganischen Phase von der Organophase abgetrennt und enthält das gesamte, vorher mit der Organophase extrahierte Eisen.

Auch in diesem Fall erweist es sich als sehr vorteilhaft, daß die Hydroxamsäuren der allgemeinen Formel (I) keine nennenswerten Mengen freier Salzsäure (ähnlich wie oben für $H_2SO_4$ angegeben) extrahieren. Außerdem werden durch die Reextraktion des Eisens in Form eines Chlorokomplexes keine schwer wasserlöslichen Chloridsalze gebildet, die dann durch Behandlung der Organophase mit Wasser nicht entfernbar wären.

Prinzipiell läßt sich der Verfahrensschritt f) der Komplexierung des Eisens auch mit in den Schritt d) der Fällung der Störelemente Arsen, Antimon und Bismut als Sulfide aus der beladenen organischen Phase einbeziehen. Es müssen dann die entsprechenden Reextraktionsmittel zusammen mit der Organophase im Fällungsgefäß, das bei hohem Druck des einzuleitenden Schwefelwasserstoffs auch ein Autoklav sein kann, vorgelegt werden. Die Fällungsreaktion der Elemente Arsen, Antimon und Bismut läuft dann genauso ab, wie dies oben für die separate Trennung beschrieben wurde. Die Elemente Arsen, Antimon und Bismut werden als schwer lösliche Sulfide gefällt, und Eisen wird in diesem Fall gleichzeitig in das jeweils verwendete Reextraktionsmedium (wäßrige Komplexbildnerphase) überführt. Bei Anwendung von Chlorwasserstoff als Reextraktionsmedium ist allerdings dann im Vergleich zur vorher beschriebenen getrennten Aufarbeitung der Eisenkomplexe der Einsatz von korrosionsbeständigen Autoklavenmaterialien erforderlich, da Chlorwasserstoff die weniger korrosionsbeständigen Stähle angreift.

In ähnlicher Weise kann auch der Verfahrensschritt der Eisen-Reextraktion (f) der Sulfidfällung (d) vorgeschaltet werden. Wird z.B. wäßrige HCl als Komplexbildner für Eisen verwendet, so enthält dann die reextrahierte Eisenphase zusätzlich noch Antimon und auch noch geringe Mengen an Arsen. Dies bedeutet, daß man aus der gewonnenen wäßrigen chloridischen Phase das Eisen nicht ohne weiteres, d.h. ohne eine Abtrennung von Antimon und Arsen, reextrahieren kann. Aus diesen Gründen ist die zuerst beschriebene Verfahrensweise, also die Reihenfolge Sulfidfällung - Abtrennung der Sulfide - nachfolgende oder gemeinsame Eisenextraktion und/oder Eisen-Reextraktion, bevorzugt.

Im letzten Schritt des erfindungsgemäßen Verfahrens h) wird die nach der Abtrennung der genannten Störelemente verbleibende wäßrige Phase auf an sich bekannten Wegen aufgearbeitet. Dies kann im Falle der Aufarbeitung von Kupfer-Elektrolytlösungen z.B. darin bestehen, daß - in Abhängigkeit von den für die Verhüttung des Kupfers eingesetzten Erzen - noch weitere Störelemente, beispielsweise Nickel, entfernt werden. Außerdem ist an dieser Stelle streng darauf zu achten, daß die erhaltene Organophase im wesentlichen nur aus den verwendeten Lösungsmitteln bzw. Extraktionsmitteln und den Extraktanden, d.h. einer oder mehrerer der oben genannten Hydroxamsäuren der allgemeinen Formel (I), besteht. Eine solche Organophase ist dann unmittelbar für den Wiedereinsatz im Extraktionskreislauf geeignet. Gegebenenfalls kann sie mit den erforderlichen Mengen an Extraktand, d.h. an einer oder mehreren der oben genannten Hydroxamsäuren der allgemeinen Formel (I) nachgeschärft werden und wird dann anschließend unmittelbar in den Extraktionsgang recyclisiert. Die genannte Verfahrensweise kann kontinuierlich dadurch erfolgen, daß permanent eine bestimmte Menge der Kupfer-Raffinations-Elektrolytlösung aus der Elektrolysevorrichtung abgezogen und den oben beschriebenen Verfahrensteilschritten unterzogen wird. Es ist jedoch auch möglich, diskontinuierlich zu arbeiten und die Mengen der Kupfer-Raffinations-Elektrolytlösung in kleinen Teilmengen abzuziehen und die mit den Störelementen beladene organische Phase in einem Tank zu sammeln. Die gesammelten Mengen der beladenen Organophase werden dann gemeinsam den oben beschriebenen Fällungs- und Reextraktionsschritten unterworfen.

Die Erfindung wird durch die nachfolgenden Beispiele näher erläutert.

Beispiel 1

Mit dem erfindungsgemäßen Verfahren kann die Extraktion der Störelemente aus einer Praxis-Elektrolytlösung (entnommen einer Kupferraffinationselektrolyse) in kontinuierlicher Weise in einem Mixer-Settler durchgeführt werden. In Abhängigkeit von der Zusammensetzung der eingesetzten Elektrolyt-Lösung (in g/l: 12,0 As, 0,030 Bi, 0,52 Sb, 0,30 Fe, 45 Cu, 10 Ni und 160 $H_2SO_4$) und den oben bei den Verfahrensteilschritten beschriebenen relevanten Parametern ist nur eine einstufige Extraktion erforderlich.

Als organisches Lösungsmittel bzw. Extraktionsmittel wurde das im Handel unter dem Namen "Escaid$^R$ 100" erhältliche Kerosin der Firma Esso verwendet.

Die eingesetzte Hydroxamsäure war aus einem Gemisch von Carbonsäuren der Formel

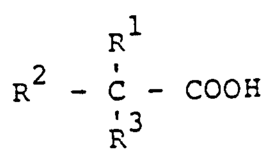

hergestellt worden, in der die Summe der Zahl der C-Atome der Substituenten $R^1$, $R^2$ und $R^3$ im Bereich zwischen 7 und 17 lag (Handelsprodukt Versatic$^R$ 1019 der Firma Shell) . Die Konzentration an Extraktand in der organischen Phase lag bei 0,5 mol/l.

Die organische Phase wies folgende Störmetallkonzentrationan auf (in g/l) 6,5 As, 0,52 Sb, 0,03Bi und 0,30 Fe.

In einen einstufigen Schüttelversuch (O/A-Verhältnis 1 : 1) wurde bei verschiedenen in Tabelle 1 angegebenen Temperaturen, Verweilzeiten und pH-Werten eine Reextraktion der vier Störelemente As, Sb, Bi und Fe durchgeführt.

Die zwei erstgenannten Elemente wurden nach Trennung der organischen von der wäßrigen Elektrolytphase durch Reextraktion der Organophase mit einer Wasserphase teilweise in die Wasserphase überführt, wobei man in starksaurem Milieu (pH 1,9 - 4,0) bis zu 45 Gew.-% des Hauptstörelements Arsen

und in mit Base eingestelltem schwachsaurem Milieu (pH 4 - 6) neben einem Teil des Hauptstörelements Arsen bis zu 37 Gew.-% Antimon reextrahiert. Die Ergebnisse der einstufigen Schütteltests in Abhängigkeit von der Temperatur der Verweilzeit und dem pH-Wert sind in nachstehender Tabelle 1 dokumentiert.

Tabelle 1

| Temp. (°C) | Verweilzeit (min) | pH (gemessen nach Reextraktion) | % Reextraktion As | Sb | Bi | Fe |
|---|---|---|---|---|---|---|
| 20 | 60 | 2,3 | 10 | 3 | 0 | 0 |
| 60 | 10 | -- | 12 | 2 | 0 | 0 |
| 60 | 20 | -- | 25 | 0 | 0 | 0 |
| 60 | 30 | -- | 27 | 0 | 0 | 0 |
| 60 | 60 | 2,0 | 32 | 3 | 0 | 0 |
| 80 | 5 | 2,0 | 23 | 4 | 0 | 0 |
| 80 | 10 | 1,9 | 35 | 3 | 0 | 0 |
| 80 | 20 | 1,9 | 40 | 3 | 0 | 0 |
| 80 | 30 | 1,9 | 40 | 3 | 0 | 0 |
| | | mit NaOH eingestellt | | | | |
| 80 | 10 | 3,0 | 43 | 5 | 0 | 0 |
| 80 | 10 | 4,0 | 45 | 32 | 0 | 0 |
| 80 | 10 | 5,0 | 36 | 32 | 0 | 0 |
| 80 | 10 | 6,0 | 21 | 37 | 0 | 0 |

Beispiel 2

Eine Praxis-Elektrolytlösung gemäß Beispiel 1 mit den Störelementen Arsen, Antimon, Bismut und Eisen wurde zunächst mit 0,5-molarer Hydroxamsäure aus Versatic[R] 1019 in Escaid[R] 100 wie vorstehend beschrieben extrahiert. Daraufhin wurde die nach der Extraktion erhaltene Organophase mit einer gleichen Volumenmenge an frischem Wasser bei einer Temperatur von 80 °C einer mehrstufigen Reextraktion von jeweils 15 min ausgesetzt, wobei die in Tabelle 2 dokumentierten Ergebnisse erhalten wurden.

Tabelle 2

| Stufe | pH (n. Reextraktion) | % Reextraktion | | | |
|---|---|---|---|---|---|
| | | As | Sb | Bi | Fe |
| 1 | 1,9 | 35 | 2 | 0 | 0 |
| 2 | 2,0 | 49 | 2 | 0 | 0 |
| 3 | 2,1 | 60 | 6 | 0 | 0 |
| 4 | 2,4 | 63 | 6 | 0 | 0 |
| 5 | 2,6 | 66 | 4 | 0 | 0 |

Beispiel 3

Eine Praxis-Elektrolytlösung gemäß Beispiel 1 wurde zunächst mit 0,5-molarer Hydroxamsäure aus Versatic$^R$ 1019 in Escaid$^R$ wie oben beschrieben extrahiert. Daraufhin wurde durch Reextraktion mit Wasser bei 80 °C und einer jeweiligen Verweilzeit von 15 min bei unterschiedlichen Volumenverhältnissen organische : wäßrige Phase die Reextraktionsisotherme ermittelt. Die Ergebnisse sind in nachstehender Tabelle 3 dokumentiert.

**Tabelle 3**

| O/A Verh. | Gehalt in organischer Phase (g/l) | | | | Gehalt in wäßriger Phase (g/l) | | | |
|---|---|---|---|---|---|---|---|---|
| | As | Sb | Bi | Fe | As | Sb | Bi | Fe |
| 1 : 5 | 3,1 | 0,51 | 0,029 | 0,30 | ≤0,2 | 0,0077 | <0,002 | <0,001 |
| 1 : 3 | 3,5 | 0,51 | 0,029 | 0,31 | 0,7 | 0,017 | <0,002 | <0,001 |
| 1 : 1 | 4,1 | 0,52 | 0,030 | 0,31 | 3,0 | 0,019 | <0,002 | <0,001 |
| 3 : 1 | 4,9 | 0,51 | 0,030 | 0,30 | 6,0 | 0,033 | <0,002 | <0,001 |
| 5 : 1 | 5,4 | 0,52 | 0,030 | 0,30 | 7,9 | 0,058 | <0,002 | <0,001 |
| 10 : 1 | 5,6 | 0,51 | 0,030 | 0,30 | 12,0 | 0,087 | <0,002 | <0,001 |
| 20 : 1 | 5,9 | 0,51 | 0,030 | 0,30 | 18,0 | 0,1880 | <0,002 | <0,001 |

Beispiel 4

Eine mit Störelementen beladene Organophase gemäß Beispiel 1 wurde mit Wasser reextrahiert und anschließend einer Sulfid-Füllung mittels $H_2S$ unterworfen.

a) Beladene Organophase
Die Konzentration an Extraktand lag bei 0,5 mol/l
Sb: 0,3 g/l
Bi: 0,1 g/l
As: 7,3 g/l

b) Reextraktion mit Wasser
1100 ml dieser oben genannten beladenen Organophase wurden mit 1100 ml destilliertem Wasser 15 min bei 60 °C gerührt (O/A-Verhältnis 1 : 1, einstufige Verfahrensweise). Nach Phasentrennung wurden die beiden Phasen analysiert.

| Organische Phase | Wäßrige Phase |
|---|---|
| Sb: 0,3 g/l<br>Bi: 0,1 g/l<br>As: 5,0 g/l | -<br>-<br>As: 2,3 g/l |
| Der pH-Wert der wäßrigen Phase betrug 1,9. | |

c) Sulfid-Fällung mit $H_2S$

Die nach der Reextraktion mit Wasser resultierende Organophase wurde in einem geschlossenen Behälter vorgelegt. Als Inertgas wurde Stickstoff verwendet. Die Reaktionsbedingungen waren:

Temperatur 60 °C, $H_2S$-Druck 0,5 bar, Reaktionszeit 5 min, kräftige Durchmischung während des Einleitens. Anschließend wurde zur Entfernung von noch gelöstem $H_2S$ etwa 30 min mit Stickstoff gespült.

Gehalte nach Sulfidfällung in der Organophase:

Sb: 0,04 g/l

Bi: <0,1 g/l

As: 4,5 g/l

Bei längerer Reaktionszeit (15 min) oder gleicher Reaktionszeit, aber höherer Temperatur (80 °C) konnte Arsen bis auf 1,5 g/l in der Organophase entfernt werden. Diese Restmenge kann gegebenenfalls bei Anwendung eines erhöhten Druckes, wie in der DE-A-37 25 611 beschrieben, komplett gefällt werden.

## Beispiel 5

Nachfolgende Versuche verdeutlichen die bevorzugte As(III)-Reextraktion im Vergleich zur As(V)-Reextraktion mit Wasser.

Als Extraktand wurde eine 0,5 molare Lösung der Hydroxamsäure, wie in Beispiel 1 beschrieben, verwendet. Als wäßrige Elektrolytlösung diente eine synthetische $H_3AsO_4$-Lösung, gelöst in Schwefelsäure (150 g/l $H_2SO_4$). Der As(V)-Gehalt entsprach einer Konzentration von 10 g/l. Nach Beladung (O/A-Verhältnis 1 : 1, 60 min bei Raumtemperatur) resultierte eine Organophase mit 6,8 g/l As(V).

Die folgenden Reextraktionsversuche wurden im O/A-Verhältnis 1 : 1 bei 60 °C unter Rühren durchgeführt (einstufig).

## Ergebnisse

| Dauer (in min) | Gehalt an As(V) in Organ.-Phase (g/l) | % Reextraktion von As(V) |
|---|---|---|
| 10 | 5,8 | 15 |
| 30 | 5,1 | 25 |
| 60 | 5,1 | 25 |

Vergleichend hierzu wurde das Verhalten bei der Reextraktion von As(III) mit Wasser untersucht.

Beladene Organophase (Extraktand wie vorher genannt) 6,4 g/l As(III).

Als wäßrige Elektrolytlösung diente eine Lösung von $As_2O_3$ in $H_2SO_4$ (150 g/l). Der As(III)-Gehalt entsprach wiederum einer Konzentration von 10 g/l.

Die Reextraktionsversuche wurden unter den gleichen Bedingungen wie vorher genannt durchgeführt.

Ergebnisse

| Dauer (in min) | Gehalt an As(III) in Organ.-Phase (g/l) | % Reextraktion von As(III) |
|---|---|---|
| 10 | 3,6 | 44 |
| 30 | 3,5 | 45 |
| 60 | 3,5 | 45 |

Die Versuche zeigen, daß As(III) bereits nach 10 min zu einem hohen Prozentsatz reextrahiert werden kann. As(V) wird zwar ebenfalls reextrahiert, doch sind hierzu längere Kontaktzeiten erforderlich.

Dieses Verhalten wird ebenfalls deutlich durch die beiden Reextraktionsisothermen von mit As(III) bzw. As(V) beladener Organophase, wie in den Beispielen 6 und 7 beschrieben.

Beispiel 6

Reextraktionsisotherme von As(III)

Versuchsbedingungen: Wie in den vorherigen Versuchen beschrieben
Beladene Organophase: 6,4 g/l As(III) aus synthetischer Lösung
Reextraktionsbedingungen: 10 min, 60 °C, destilliertes Wasser, unterschiedliche O/A-Verhältnisse.

Ergebnisse

| | ml | Gehalt an As(III) | |
|---|---|---|---|
| O : A | O : A | O-Phase | A-Phase |
| 5 : 1 | 50 : 10 | 5,3 | 6,9 |
| 3 : 1 | 30 : 10 | 4,7 | 5,6 |
| 2 : 1 | 20 : 10 | 4,1 | 4,8 |
| 1 : 1 | 20 : 20 | 3,6 | 3,1 |
| 1 : 2 | 10 : 20 | 2,5 | 2,3 |
| 1 : 3 | 10 : 30 | 2,2 | 2,1 |
| 1 : 5 | 10 : 50 | 1,6 | 1,0 |
| 1 : 10 | 10 : 100 | 1,2 | 0,57 |

Beispiel 7

Reextraktionsisotherme von As(V)

Versuchsbedingungen: wie vorher genannt.
Beladene Organophase: 6,8 g/l As(V) aus synthetischer Losung
Reextraktionsbedingungen: siehe vorher

Ergebnisse

| | ml | Gehalt an As(V) | |
|---|---|---|---|
| O : A | O : A | O-Phase | A-Phase |
| 5 : 1 | 50 : 10 | 6,5 | 2,1 |
| 3 : 1 | 30 : 10 | 6,3 | 1,6 |
| 2 : 1 | 20 : 10 | 5,9 | 1,7 |
| 1 : 1 | 20 : 20 | 5,8 | 1,0 |
| 1 : 2 | 10 : 20 | 5,8 | 0,57 |
| 1 : 3 | 10 : 30 | 5,4 | 0,61 |
| 1 : 5 | 10 : 50 | 5,4 | 0,32 |
| 1 : 10 | 10 : 100 | 4,7 | 0,20 |

**Patentansprüche**

**1.** Verfahren zur Abtrennung Von Elementen, ausgewählt aus Arsen, Antimon, Bismut und/oder Eisen aus Wertmetall-Elektrolytlösungen im Wege der Solvent-Extraktion und nachfolgende Wiedergewinnung der genannten Störelemente, bei dem man

a) wäßrige, mineralsaure Wertmetall-Elektrolytlösungen mit einem wenig wasserlöslichen, eine oder mehrere Hydroxamsäuren der allgemeinen Formel (I)

$$R - \overset{O}{\overset{\|}{C}} - NHOH \qquad (I)$$

in der R für einen geradkettigen oder verzweigten, gesättigten oder ungesättigten Alkylrest mit 6 bis 22 C-Atomen, Cycloalkylrest oder Arylrest mit bis zu 19 C-Atomen steht, enthaltenden organischen Lösungsmittel versetzt,

b) die wäßrige und organische Phase über eine ausreichende Kontaktierungszeit intensiv miteinander mischt,

c) nach Phasentrennung die organische Phase abtrennt,

d) die organische Phase mit einem Sulfidierungsmittel versetzt,

e) die Sulfidfällungen des Arsens, Antimons und Wismuts auf an sich bekannte Weise von der Organo-Phase abtrennt,

f) die organische Phase gegebenenfalls mit einem wasserlöslichen Komplexbildner für Eisen oder einer wäßrigen Lösung eines solchen Kom-plexbildners versetzt,

g) den gebildeten Eisenkomplex mit Wasser reextrahiert

h) und die verbleibende Organophase auf an sich bekannte Weise aufarbeitet und/oder nachschärft und recyclisiert,

dadurch gekennnzeichnet, daß man nach Abtrennung der organischen Phase - Schritt c -, vor oder nach der Sulfidfällung - Schritt d -,

i) die mit Störelementen beladene organische Phase mit Wasser über eine ausreichende Kontaktierungszeit reextrahiert,

k) das in die Wasserphase reextrahierte Störmetall gegebenenfalls in an sich bekannter Weise reduktiv ausfällt und als Nebenprodukt aufarbeitet,

wobei man den Zusatz des Komplexbildners für Eisen - Schritt f - entweder im Anschluß an die Abtrennung der Sulfidfällung - Schritt e - oder zusammen mit dem Zusatz des Sulfidiermittels - Schritt d - oder vor dem Zusatz desselben vornimmt.

**2.** Verfahren nach Anspruch 1, dadurch gekennzeichnet, daß man die Reextraktion der organischen Phase mit Wasser - Schritt i - vor der Sulfidfällung - Schritt d - vornimmt.

3. Verfahren nach Anspruch 1, dadurch gekennzeichnet, daß man den Zusatz des Komplexbildners für Eisen - Schritt f - im Anschluß an die Abtrennung der Sulfidfällung von der organischen Phase - Schritt e - vornimmt.

4. Verfahren nach Ansprüchen 1 bis 3, dadurch gekennzeichnet, daß man die Elemente Arsen, Antimon, Bismut und/oder Eisen aus wäßrigen, mineralsauren Kupfer-Elektrolytlösungen abtrennt.

5. Verfahren nach Anspruch 4, dadurch gekennzeichnet, daß man die Elemente Arsen, Antimon, Bismut und/oder Eisen aus wäßrigen, schwefelsauren Kupfer-Raffinationselektrolyt-Lösungen abtrennt.

6. Verfahren nach Ansprüchen 1 bis 5, dadurch gekennzeichnet, daß man als inerte organische Lösungsmittel Kohlenwasserstoffe oder deren Mischungen, chlorierte Kohlenwasserstoffe, Ketone oder Ether, bevorzugt Kerosine oder deren Mischungen, verwendet.

7. Verfahren nach Ansprüchen 1 bis 6, dadurch gekennzeichnet, daß man Kerosine oder deren Mischungen verwendet, die eine oder mehrere Hydroxamsäuren der allgemeinen Formel (I) enthalten, in der R für verzweigte, gesättigte Alkylreste mit 6 bis 22 C-Atomen, bevorzugt mit 7 bis 19 C-Atomen, steht.

8. Verfahren nach Anspruch 7, dadurch gekennzeichnet, daß man Kerosine oder deren Mischungen verwendet, die eine oder mehrere Hydroxamsäuren der allgemeinen Formel (I) enthalten, in der R für neo-Alkylreste der allgemeinen Formel (II) steht,

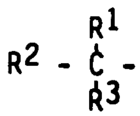

(II)

in der die Summe der Zahl der C-Atome der Reste $R^1$, $R^2$ und $R^3$ im Bereich von 6 bis 18 liegt.

9. Verfahren nach Ansprüchen 1 bis 8, dadurch gekennzeichnet, daß man Kerosine oder deren Mischungen verwendet, die eine oder mehrere Hydroxamsäuren der allgemeinen Formel (I) in einer Konzentration von 0,1 bis 2,0 mol/l organische Phase, bevorzugt in einer Konzentration von 0,5 bis 1,0 mol/l organische Phase, enthalten.

10. Verfahren nach Ansprüchen 1 bis 9, dadurch gekennzeichnet, daß man die wäßrige und die organische, die Hydroxamsäure(n) enthaltende Phase über eine Zeit von 1 bis 60 min, bevorzugt über eine Zeit von 10 bis 20 min, intensiv miteinander mischt.

11. Verfahren nach Ansprüchen 1 bis 9, dadurch gekennzeichnet, daß man die wäßrige und die organische, die Hydroxamsäure(n) enthaltende Phase bei einer Temperatur von 20 bis 70 °C, bevorzugt bei einer Temperatur von 30 bis 60 °C, intensiv miteinander mischt.

12. Verfahren nach Ansprüchen 1 bis 11, dadurch gekennzeichnet, daß man die Reextraktion der organischen Phase mit Nasser in Abhängigkeit von Art und Menge des vorhandenen Arsens so durchführt, daß man As(III)ionen vergleichsweise rascher als As(V)ionen durch einfache oder mehrfache Reextraktion in die Wasserphase reextrahiert, die gegebenenfalls reextrahierten As(V)ionen reduziert und das Gesamt-Arsen als As(III)ionen fällt.

13. Verfahren nach Ansprüchen 1 bis 3 oder 12, dadurch gekennzeichnet, daß man die Reextraktion der organischen Phase mit Wasser über eine Zeit von 1 bis 20 min, vorzugsweise über eine Zeit von 10 bis 15 min durch intensives Miteinandervermischen durchführt.

14. Verfahren nach Ansprüchen 1 bis 3 oder 12, dadurch gekennzeichnet, daß man die Reextraktion der organischen Phase mit Wasser bei einer Temperatur von 20 bis 80 °C, bevorzugt bei einer Temperatur von 50 bis 70 °C durch intensives Miteinandervermischen durchführt.

**15.** Verfahren nach Ansprüchen 1 bis 3 oder 12, dadurch gekennzeichnet, daß man die Reextraktion der organischen Phase mit Wasser in der Art durchführt, daß man zu 100 Volumen-Teilen organische Phase 5 bis 2 000 Volumen-Teile Wasser hinzugibt.

**16.** Verfahren nach Ansprüchen 1 bis 3 oder 12, dadurch gekennzeichnet, daß man die Reextraktion der organischen Phase mit Nasser in einem pH-Wert-Bereich von 0 bis 6, vorzugsweise 1,5 bis 4 durchführt und auf diese Weise selektiv einen Teil des Arsens in die Wasserphase überführt, wobei sich im Falle von As(III)ionen Arsenige Säure bzw. Arsentrioxid bildet.

**17.** Verfahren nach Ansprüchen 1 bis 3 oder 12, dadurch gekennzeichnet, daß man die Reextraktion der organischen Phase mit Wasser in einem pH-Wert-Bereich von 3 bis 6,0, vorzugsweise 4 bis 6 durchführt und auf diese Weise neben dem Hauptbestandteil Arsen den Nebenbestandteil Antimon in die wäßrige Phase überführt.

**18.** Verfahren nach Ansprüchen 1 bis 3, dadurch gekennzeichnet, daß man als Sulfidierungsmittel $H_2S$, wasserfreies $Na_2S$ oder NaHS, bevorzugt $H_2S$, verwendet.

**19.** Verfahren nach Ansprüchen 1 bis 3 oder 18, dadurch gekennzeichnet, daß man $H_2S$ in stöchiometrischer oder geringfügig überstöchiometrischer Menge in das Reaktionssystem einleitet und dieses dann mit einem Inertgas beaufschlagt.

**20.** Verfahren nach Ansprüchen 1 bis 3 oder 18, dadurch gekennzeichnet, daß man die Sulfidierung bei einem $H_2S$-Druck von 0,1 bis 50 bar, bevorzugt bei einem Druck von 0,5 bis 1 bar, durchführt.

**21.** Verfahren nach Ansprüchen 1 bis 3 oder 18, dadurch gekennzeichnet, daß man die Sulfidierung bei einer Temperatur von 40 bis 90 °C, vorzugsweise von 60 bis 80 °C, durchführt.

**22.** Verfahren nach Ansprüchen 1 bis 3 oder 18, dadurch gekennzeichnet, daß man die Sulfidierung über eine Reaktionszeit von 1 bis 60 min, bevorzugt von 5 bis 20 min, durchführt.

**23.** Verfahren nach Ansprüchen 1 bis 3 und 18 bis 22, dadurch gekennzeichnet, daß man die nach der Sulfidfällung erhaltene Organophase durch Ausblasen oder Spülen mit einem Inertgas von überschüssigem und/oder gelöstem Schwefelwasserstoff vollständig befreit.

**24.** Verfahren nach Ansprüchen 1 bis 3 und 18 bis 22, dadurch gekennzeichnet, daß man die ausgefällten Sulfide von der Organophase abfiltriert und den Filterkuchen gegebenenfalls mit einer Mineralsäure und danach mit einem organischen Lösungsmittel wäscht.

**25.** Verfahren nach Ansprüchen 1bis 3, dadurch gekennzeichnet, daß man als wasserlöslichen Komplexbildner für Eisen eine Verbindung aus der Gruppe HCl, Oxalsäure und Hydroxyethandiphosphonsäure verwendet.

**26.** Verfahren nach Ansprüchen 1 bis 3 und 25, dadurch gekennzeichnet, daß man einen wasserlöslichen Komplexbildner für Eisen in einer Konzentration von 0,1 bis 2 mol/l, bevorzugt in einer Konzentration von 0,5 bis 1 mol/l einsetzt.

**27.** Verfahren nach Ansprüchen 1 bis 3 und 25, dadurch gekennzeichnet, daß man die Umsetzung mit einem wasserlöslichen Komplexbildner für Eisen über eine Zeit von 1 bis 20 min, bevorzugt über eine Zeit von 5 bis 15 min, durchführt.

**28.** Verfahren nach Ansprüchen 1 bis 3 und 25 bis 27, dadurch gekennzeichnet, daß man bei Verwendung von Chlorwasserstoff oder wäßriger Salzsäure als wasserlöslichem Komplexbildner für Eisen die eisenhaltige Phase nach der Chlorwasserstoff- oder Salzsäurezugabe mit einem flüssigen Ionenaustauscher in Form eines sekundären Amins versetzt und das so extrahierte Eisen anschließend mit Wasser reextrahiert.

**29.** Verfahren nach Ansprüchen 1 bis 3 sowie 10, 11 und 25, dadurch gekennzeichnet, daß man das Vermischen der wäßrigen und der organischen Phase sowie die Umsetzung mit einem wasserlöslichen

Komplexbildner für Eisen in einem Mixer-Settler vornimmt.

**30.** Verfahren nach Ansprüchen 1 bis 29, dadurch gekennzeichnet, daß man zusätzlich zur Weiterverwertung der abgetrennten Störelemente diese aus den Sulfidniederschlägen bwz. Reextraktionslösungen über schmelzmetallurgische oder hydrometallurgische Verfahren zurückgewinnt.

**Claims**

**1.** A process for separating elements selected from arsenic, antimony, bismuth and/or iron from valuable-metal electrolyte solutions by solvent extraction and subsequent recovery of the extraneous elements mentioned, in which

a) a sparingly water-soluble organic solvent containing one or more hydroxamic acids corresponding to general formula (I):

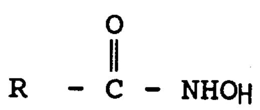

(I)

in which R is a linear or branched, saturated or unsaturated alkyl radical containing 6 to 22 carbon atoms, a cycloalkyl radical or an aryl radical containing up to 19 carbon atoms, is added to aqueous valuable-metal electrolyte solutions in a mineral acid,

b) the aqueous phase and the organic phase are intensively mixed over an adequate contact time,

c) after phase separation, the organic phase is removed,

d) a sulfidizing agent is added to the organic phase,

e) the sulfide precipitations of the arsenic, antimony and bismuth are separated from the organic phase in known manner,

f) a water-soluble complexing agent for iron or an aqueous solution of such a complexing agent is added to the organic phase,

g) the iron complex formed is re-extracted with water

h) and the organic phase remaining is worked up and/or restrengthened and recycled in known manner,

characterized in that, after separation of the organic phase (step c) and before or after precipitation of the sulfides (step d)

i) the organic phase containing extraneous elements is re-extracted with water over a sufficient contact time,

k) the extraneous metal re-extracted into the water phase is reductively precipitated in known manner and worked up as a secondary product,

the addition of the complexing agent for iron (step f) being made either after separation of the sulfides precipitated (step e) or together with the addition of the sulfidizing agent (step d) or before the addition thereof.

**2.** A process as claimed in claim 1, characterized in that the re-extraction of the organic phase with water (step i) is carried out before precipitation of the sulfides (step d).

**3.** A process as claimed in claim 1, characterized in that the addition of the complexing agent for iron (step f) is carried out after separation of the sulfides precipitated from the organic phase (step e).

**4.** A process as claimed in claims 1 to 3, characterized in that the elements arsenic, antimony, bismuth and/or iron are separated from aqueous copper electrolyte solutions in a mineral acid.

**5.** A process as claimed in claim 4, characterized in that the elements arsenic, antimony, bismuth and/or iron are separated from aqueous copper refining electrolyte solutions in sulfuric acid.

**6.** A process as claimed in claims 1 to 5, characterized in that the hydrocarbons or mixtures thereof, chlorinated hydrocarbons, ketones or ethers, preferably kerosenes or mixtures thereof, are used as the inert organic solvents.

**7.** A process as claimed in claims 1 to 6, characterized in that kerosenes or mixtures thereof containing one or more hydroxamic acids corresponding to general formula (I), in which R represents branched saturated $C_{6-22}$ and preferably $C_{7-19}$ alkyl radicals, are used.

**8.** A process as claimed in claim 7, characterized in that kerosenes or mixtures thereof containing one or more hydroxamic acids corresponding to general formula (I), in which R represents neoalkyl radicals corresponding to general formula (II)

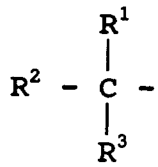

(II)

in which the sum total of carbon atoms in the substituents $R^1$, $R^2$ and $R^3$ is 6 to 18, are used.

**9.** A process as claimed in claims 1 to 8, characterized in that kerosenes or mixtures thereof containing one or more hydroxamic acids corresponding to general formula (I) in a concentration of 0.1 to 2.0 mol/l organic phase and preferably in a concentration of 0.5 to 1.0 mol/l organic phase are used.

**10.** A process as claimed in claims 1 to 9, characterized in that the aqueous phase and the organic phase containing the hydroxamic acid(s) are intensively mixed over a period of 1 to 60 minutes and preferably over a period of 10 to 20 minutes.

**11.** A process as claimed in claims 1 to 9, characterized in that the aqueous phase and the organic phase containing the hydroxamic acid(s) are intensively mixed with one another at a temperature of 20 to 70 °C and preferably at a temperature of 30 to 60 °C.

**12.** A process as claimed in claims 1 to 11, characterized in that re-extraction of the organic phase with water is carried out in dependence upon the type and quantity of arsenic present by re-extracting As(III) ions comparatively more quickly than As(V) ions by single or multiple re-extraction into the water phase, reducing the As(V) ions optionally re-extracted and precipitating the total arsenic as As(III) ions.

**13.** A process as claimed in claims 1 to 3 or 12, characterized in that re-extraction of the organic phase with water is carried out over a period of 1 to 20 minutes and preferably over a period of 10 to 15 minutes by intensive intermixing.

**14.** A process as claimed in claims 1 to 3 or 12, characterized in that re-extraction of the organic phase with water is carried out at a temperature of 20 to 80 °C and preferably at a temperature of 50 to 70 °C by intensive intermixing.

**15.** A process as claimed in claims 1 to 3 or 12, characterized in that re-extraction of the organic phase with water is carried out by addition of 5 to 2,000 parts by volume water to 100 parts by volume organic phase.

**16.** A process as claimed in claims 1 to 3 or 12, characterized in that re-extraction of the organic phase with water is carried out at a pH value in the range from 0 to 6 and preferably at a pH value in the range from 1.5 to 4 so that part of the arsenic is selectively transferred to the aqueous phase, arsenous acid or arsenic trioxide being formed in the case of As(III) ions.

**17.** A process as claimed in claims 1 to 3 or 12, characterized in that re-extraction of the organic phase with water is carried out at a pH value in the range from 3 to 6.0 and preferably at a pH value in the range from 4 to 6 so that, in addition to the principal component arsenic, the secondary component antimony is transferred to the aqueous phase.

**18.** A process as claimed in claims 1 to 3, characterized in that $H_2S$, anhydrous $Na_2S$ or NaHS, preferably $H_2S$, is used as the sulfidizing agent.

**19.** A process as claimed in claims 1 to 3 or 18, characterized in that $H_2S$ is introduced into the reaction system in a stoichiometric or slightly overstoichiometric quantity, after which the reaction system is purged with an inert gas.

**20.** A process as claimed in claims 1 to 3 or 18, characterized in that the sulfidizing step is carried out under an $H_2S$ pressure of 0.1 to 50 bar and preferably under a pressure of 0.5 to 1 bar.

**21.** A process as claimed in claims 1 to 3 or 18, characterized in that the sulfidizing step is carried out at a temperature of 40 to 90 °C and preferably at a temperature of 60 to 80 °C.

**22.** A process as claimed in claims 1 to 3 or 18, characterized in that the sulfidizing step is carried out over a reaction time of 1 to 60 minutes and preferably 5 to 20 minutes.

**23.** A process as claimed in claims 1 to 3 and 18 to 22, characterized in that the organic phase obtained after precipitation of the sulfides is completely freed from excess and/or dissolved hydrogen sulfide by blowing out or purging with an inert gas.

**24.** A process as claimed in claims 1 to 3 and 18 to 22, characterized in that the sulfides precipitated are filtered off from the organic phase and the filter cake is optionally washed with a mineral acid and then with an organic solvent.

**25.** A process as claimed in claims 1 to 3, characterized in that a compound from the group consisting of HCl, oxalic acid and hydroxyethane diphosphonic acid is used as the water-soluble complexing agent for iron.

**26.** A process as claimed in claims 1 to 3 and 25, characterized in that a water-soluble complexing agent for iron is used in a concentration of 0.1 to 2 mol/l and preferably in a concentration of 0.5 to 1 mol/l.

**27.** A process as claimed in claims 1 to 3 and 25, characterized in that the reaction is carried out with a water-soluble complexing agent for iron over a period of 1 to 20 minutes and preferably over a period of 5 to 15 minutes.

**28.** A process as claimed in claims 1 to 23 and 25 to 27, characterized in that, where hydrogen chloride or aqueous hydrochloric acid is used as the water-soluble complexing agent for iron, a liquid ion exchanger in the form of a secondary amine is added to the iron-containing phase after the addition of hydrogen chloride or hydrochloric acid and the iron thus extracted is subsequently re-extracted with water.

**29.** A process as claimed in claims 1 to 3 and 10, 11 and 25, characterized in that mixing of the aqueous phase and the organic phase and the reaction with a water-soluble complexing agent for iron is carried out in a mixer-settler.

**30.** A process as claimed in claims 1 to 29, characterized in that, in addition to their subsequent utilization, the extraneous elements separated off are recovered from the sulfides precipitated or the re-extraction solutions by pyrometallurgical or hydrometallurgical methods.

## Revendications

**1.** Procédé de séparation d'éléments, sélectionnés parmi l'arsenic, l'antimoine, le bismuth et/ou le fer, de solutions électrolytiques de métaux précieux, sous la forme d'une extraction par solvant suivie de récupération des éléments perturbateurs mentionnés, dans lequel

a) on mélange des solutions électrolytiques d'acide minéral, aqueuses, de métaux précieux avec un solvant organique peu soluble dans l'eau renfermant un ou plusieurs acides hydroxamiques de la formule générale (I)

$$R - \overset{\overset{O}{\|}}{C} - NHOH \qquad (I)$$

dans laquelle R représente un radical alkyle saturé ou insaturé, à chaîne droite ou ramifiée, comportant 6 à 22 atomes de C, un radical cycloalkyle ou un radical aryle comportant jusqu'à 19 atomes de C,

b) on mélange intimement les phases aqueuse et organique pendant un temps de contact suffisant,

c) on sépare la phase organique après la séparation des phases,

d) on mélange la phase organique avec un agent de sulfuration,

e) on sépare les précipités de sulfure d'arsenic, antimoine, et bismuth de la phase organique, selon une méthode connue en soi,

f) on mélange la phase organique le cas échéant avec un agent séquestrant pour le fer, soluble dans l'eau, ou avec une solution aqueuse d'un agent séquestrant de ce type,

g) on réextrait le complexe ferreux formé avec de l'eau, et

h) on traite et/ou régénère et recycle la phase organique résiduelle d'une manière connue en soi,

caractérisé en ce qu'après la séparation de la phase organique (étape c), avant ou après la précipitation de sulfure (étape d),

i) on réextrait la phase organique chargée d'éléments perturbateurs, avec de l'eau, pendant une durée de contact suffisante,

k) on précipite le cas échéant le métal perturbateur réextrait dans la phase aqueuse, par réduction selon une méthode connue en soi, et on le traite comme sous-produit,

l'adjonction de l'agent séquestrant pour le fer (étape f) étant effectuée soit à la suite de la séparation du précipité de sulfure (étape e), ou en même temps que l'adjonction de l'agent de sulfuration (étape d), ou avant l'addition de celui-ci.

**2.** Procédé selon la revendication 1, caractérisé en ce que l'on procède à la réextraction de la phase organique avec de l'eau (étape i), avant la précipitation de sulfure (étape d).

**3.** Procédé selon la revendication 1, caractérisé en ce que l'on procède à l'adjonction de l'agent séquestrant pour le fer (étape f), à la suite de la séparation du précipité de sulfure de la phase organique (étape e).

**4.** Procédé selon les revendications 1 à 3, caractérisé en ce que l'on sépare les éléments arsenic, antimoine, bismuth et/ou fer de solutions électrolytiques d'acide minéral, aqueuses, de cuivre.

**5.** Procédé selon la revendication 4, caractérisé en ce que l'on sépare les éléments arsenic, antimoine, bismuth et/ou fer de solutions électrolytiques de raffinage sulfuriques, aqueuses, de cuivre.

**6.** Procédé selon les revendications 1 à 5, caractérisé en ce que l'on utilise comme solvants organiques inertes, des hydrocarbures ou leurs mélanges, des hydrocarbures chlorés, des cétones ou des éthers, de préférence des kérosines ou leurs mélanges.

**7.** Procédé selon les revendications 1 à 6, caractérisé en ce que l'on utilise des kérosines ou leurs mélanges, qui renferment un ou plusieurs acides hydroxamiques de la formule générale (I), dans laquelle R représente des radicaux alkyle saturés, ramifiés, comportant 6 à 22 atomes de C, de préférence 7 à 19 atomes de C.

**8.** Procédé selon la revendication 7, caractérisé en ce que l'on utilise des kérosines ou leurs mélanges, qui renferment un ou plusieurs acides hydroxamiques de la formule générale (I), dans laquelle R représente des radicaux néoalkyle de la formule générale (II),

$$R^2 - \overset{\displaystyle R^1}{\underset{\displaystyle R^3}{C}} - \qquad (II)$$

dans laquelle la somme du nombre des atomes de C des radicaux $R^1$, $R^2$ et $R^3$ est comprise dans l'intervalle de 6 à 18.

**9.** Procédé selon les revendications 1 à 8, caractérisé en ce que l'on utilise des kérosines ou leurs mélanges, qui renferment un ou plusieurs acides hydroxamiques de la formule générale (I), à une concentration de 0,1 à 2,0 moles par 1 de phase organique, de préférence à une concentration de 0,5 à 1,0 mole par 1 de phase organique.

**10.** Procédé selon les revendications 1 à 9, caractérisé en ce que l'on mélange intimement les phases aqueuse et organique, ainsi que la phase renfermant le ou les acides hydroxamiques, pendant une durée comprise entre 1 et 60 minutes, de préférence entre 10 et 20 minutes.

**11.** Procédé selon les revendications 1 à 9, caractérisé en ce que l'on mélange intimement les phases aqueuse et organique, ainsi que la phase renfermant le ou les acides hydroxamiques, à une température comprise entre 20 et 70 °C, de préférence comprise entre 30 et 60 °C.

**12.** Procédé selon les revendications 1 à 11, caractérisé en ce que l'on opère la réextraction de la phase organique avec de l'eau, en fonction de la nature et de la quantité de l'arsenic présent, de telle manière que l'on réextrait les ions As(III) relativement plus rapidement que les ions As(V), par réextraction simple ou multiple dans la phase aqueuse, en ce que l'on réduit les ions As(V) éventuellement réextraits et en ce que l'on précipite la totalité de l'arsenic comme ions As(III).

**13.** Procédé selon les revendications 1 à 3 ou 12, caractérisé en ce que l'on opère la réextraction de la phase organique avec de l'eau en une durée comprise entre 1 et 20 minutes, de préférence entre 10 et 15 minutes, par mélange mutuel intime.

**14.** Procédé selon les revendications 1 à 3 ou 12, caractérisé en ce que l'on opère la réextraction de la phase organique avec de l'eau à une température comprise entre 20 et 80 °C, de préférence entre 50 et 70 °C, par mélange mutuel intime.

**15.** Procédé selon les revendications 1 à 3 ou 12, caractérisé en ce que l'on opère la réextraction de la phase organique avec de l'eau, de manière telle que l'on additionne 5 à 2000 parties en volume d'eau à 100 parties en volume de la phase organique.

**16.** Procédé selon les revendications 1 à 3 ou 12, caractérisé en ce que l'on opère la réextraction de la phase organique avec de l'eau, dans une plage de pH s'étendant de 0 à 6, de préférence de 1,5 à 4,et en ce que l'on transfère ainsi de manière sélective une partie de l'arsenic dans la phase aqueuse, ce qui entraîne la formation d'acide arsénieux ou de trioxyde d'arsenic dans le cas d'ions As(III).

**17.** Procédé selon les revendications 1 à 3 ou 12, caractérisé en ce que l'on opère la réextraction de la phase organique avec de l'eau dans une plage de pH s'étendant de 3 à 6,0, de préférence de 4 à 6 et en ce que l'on transfère ainsi dans la phase aqueuse, non seulement le constituant principal arsenic, mais également le constituant secondaire antimoine.

**18.** Procédé selon les revendications 1 à 3, caractérisé en ce que l'on utilise comme agent de sulfuration du $H_2S$, du $Na_2S$ anhydre ou du NaHS, de préférence du $H_2S$.

**19.** Procédé selon les revendications 1 à 3 ou 18, caractérisé en ce que l'on introduit du $H_2S$ en quantités stoechiométriques ou légèrement hyperstoechiométriques dans le système réactionnel et en ce que l'on injecte ensuite un gaz inerte dans celui-ci.

**20.** Procédé selon les revendications 1 à 3 ou 18, caractérisé en ce que l'on opère la sulfuration à une pression de $H_2S$ comprise entre 0,1 et 50 bars, de préférence entre 0,5 et 1 bar.

**21.** Procédé selon les revendications 1 à 3 ou 18, caractérisé en ce que l'on opère la sulfuration à une température comprise entre 40 et 90 °C, de préférence entre 60 et 80 °C.

**22.** Procédé selon les revendications 1 à 3 ou 18, caractérisé en ce que l'on opère la sulfuration pendant une durée de réaction comprise entre 1 et 60 minutes, de préférence entre 5 et 20 minutes.

**23.** Procédé selon les revendications 1 à 3 et 18 à 22, caractérisé en ce que la phase organique obtenue après la précipitation de sulfure est complètement débarrassée de l'acide sulfhydrique excédentaire et/ou dissous par soufflage ou rinçage à l'aide d'un gaz inerte.

**24.** Procédé selon les revendications 1 à 3 et 18 à 22, caractérisé en ce que les sulfures précipités sont séparés de la phase organique par filtration et en ce que l'on lave le gâteau de filtrat le cas échéant à l'aide d'un acide minéral et ensuite au moyen d'un solvant organique.

**25.** Procédé selon les revendications 1 à 3, caractérisé en ce que l'on utilise comme agent séquestrant pour le fer, soluble dans l'eau, un composé faisant partie du groupe formé par les acides chlorhydrique, oxalique et hydroxyéthanediphosphonique.

**26.** Procédé selon les revendications 1 à 3 et 25, caractérisé en ce que l'on met en oeuvre un agent séquestrant pour le fer, soluble dans l'eau, à une concentration comprise entre 0,1 et 2 mole/l, de préférence entre 0,5 et 1 mole/l.

**27.** Procédé selon les revendications 1 à 3 et 25, caractérisé en ce que l'on effectue la réaction avec un agent séquestrant pour le fer, soluble dans l'eau, en une durée comprise entre 1 et 20 minutes, de préférence entre 5 et 15 minutes.

**28.** Procédé selon les revendications 1 à 3 et 25 à 27, caractérisé en ce qu'en cas d'emploi de chlorure d'hydrogène ou d'acide chlorhydrique aqueux comme agent séquestrant pour le fer, soluble dans l'eau, on mélange la phase ferrifère après l'addition du chlorure d'hydrogène ou de l'acide chlorhydrique avec un échangeur d'ions liquide, sous la forme d'une amine secondaire, et en ce que l'on réextrait ensuite le fer ainsi extrait avec de l'eau.

**29.** Procédé selon les revendications 1 à 3 , ainsi que 10, 11 et 25, caractérisé en ce que l'on effectue le mélange des phases aqueuse et organique, ainsi que la réaction avec un agent séquestrant pour le fer, soluble dans l'eau, dans un mélangeur-décanteur.

**30.** Procédé selon les revendications 1 à 29, caractérisé en ce que l'on récupère en plus des éléments perturbateurs séparés, ceux provenant des précipités de sulfure ou des solutions d'extraction, par des procédés de métallurgie de fusion ou d'hydrométallurgie.